# EUROPEAN PATENT APPLICATION

(11) **EP 4 560 493 A1**
(43) Date of publication of application: **28.05.2025**
(21) Application number: 24213925.1
(22) Date of filing: 19.11.2024
(51) Int. Cl.: G06F 16/54, G06F 16/58

(54) **A METHOD, AN APPARATUS AND A COMPUTER PROGRAM PRODUCT FOR DATA MANAGEMENT**

(30) Priority: 23.11.2023 FI 20236291
(71) Applicant: Suomen Kuvadata Oy, 00410 Helsinki (FI)
(72) Inventor: Laamanen, Jukka, 02660 Espoo (FI); Liikanen, Pentti, 45100 Kouvola (FI)
(74) Representative: Berggren Oy

(57) **Abstract**

The embodiments relate to a method comprising receiving an initial image; determining at least one inclusive file; generating metadata for said at least one inclusive file, the metadata comprising at least a location on the visual content of the initial image and an identification of the initial image; generating a visual indication to said location on the visual content of the initial image; and storing the initial image and the one or more inclusive files in a server or in a cloud with their corresponding metadata. The embodiments also concern technical equipment for implementing the method.

## Description

### Technical Field

The present solution generally relates to data management. In particular, the present solution relates to image-based data management.

### Background

Browsing files in a folder-based system is a typical way of searching data. A folder-based system comprises a list view of files, which are recognized by their file names. Files relating to a common feature may be bundled up under a common folder. For instance, a user may have electronic folders for storing electronic manuals for household appliances. As an example, the user may have a folder "kitchen" that comprises manuals for refrigerator, coffee maker, oven, dishwasher, etc. Similarly, the user may have a folder "living room" that comprises manuals for television, audio system, laptop, etc. This kind of example represents the ideal way of storing documents, however - in reality - all the manuals may be gathered under a common folder with unidentifiable names - or even worse, they are printed out and piled up in a storage box or hidden in a wardrobe.

### Summary

The present embodiments aim to provide more intuitive way of storing data that is in electronic form. The present embodiments may be based on two- or three-dimensional model that is provided for a user for data searching and retrieval.

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is provided a method, comprising receiving an initial image; determining at least one inclusive file; generating metadata for said at least one inclusive file, the metadata comprising at least a location on the visual content of the initial image and an identification of the initial image; generating a visual indication to said location on the visual content of the initial image; and storing the initial image and the one or more inclusive files in a server or in a cloud with their corresponding metadata.

According to a second aspect, there is provided an apparatus, comprising: receiving an initial image; determining at least one inclusive file; generating metadata for said at least one inclusive file, the metadata comprising at least a location on the visual content of the initial image and an identification of the initial image; generating a visual indication to said location on the visual content of the initial image; and storing the initial image and the one or more inclusive files in a server or in a cloud with their corresponding metadata.

According to a third aspect, there is provided computer program product comprising computer program code configured to, when executed on at least one processor, cause an apparatus or a system to receive an initial image; determine at least one inclusive file; generate metadata for said at least one inclusive file, the metadata comprising at least a location on the visual content of the initial image and an identification of the initial image; generate a visual indication to said location on the visual content of the initial image; and store the initial image and the one or more inclusive files in a server or in a cloud with their corresponding metadata.

According to an embodiment, the metadata comprises time information relating to an inclusive file.

According to an embodiment, an image model on the initial image is generated and displaying the image model to a user, wherein the image model comprises generated visual indications.

According to an embodiment, as a response to user's selection of a visual indication, an inclusive file is retrieved.

According to an embodiment, a timeline of inclusive files is generated based on the time information being stored in their metadata.

According to an embodiment, the inclusive file is an image.

According to an embodiment, at least one further image is determined; metadata for said at least one further image is generated, the metadata comprising at least a location on the visual content of the inclusive file and an identification of the inclusive file; a visual indication is generated to said location on the visual content of the inclusive file; and the at least one further image is stored in a server or in a cloud with their corresponding metadata.

According to an embodiment, the means of the apparatus comprises at least a processor, a memory, and a computer program stored in said memory.

### Description of the Drawings

In the following, various embodiments will be described in more detail with reference to the appended drawings, in which
Fig. 1a shows a simplified example of storing data according to present embodiments;
Fig. 1b shows another simplified example of storing data according to present embodiments;
Fig. 2 shows an example of how the embodiments can be utilized;
Fig. 3 shows another example of how the embodiments can be utilized;
Fig. 4 shows yet another example of how the embodiments can be utilized;
Fig. 5 shows an example of retrieval of data according to present embodiments;
Figs. 6a, 6b show an example of a user interface layout for data retrieval;
Fig. 7 shows a system architecture according to an embodiment;
Fig. 8 is a flowchart illustrating a method according to an embodiment;
Fig. 9 is a flowchart illustrating a method according to another embodiment;
Fig. 10 is a flowchart illustrating a method according to yet another embodiment;
Fig. 11 is a flowchart illustrating a method according to yet another embodiment; and
Fig. 12 is a flowchart illustrating a method according to yet another embodiment.

### Description of Example Embodiments

The following description and drawings are illustrative and are not to be construed as unnecessarily limiting. The specific details are provided for a thorough understanding of the disclosure. However, in certain instances, well-known or conventional details are not described in order to avoid obscuring the description. Reference in this specification to "one embodiment" or "an embodiment" means that a particular feature, structure, or characteristic described in connection with the embodiment is included in at least one embodiment of the disclosure.

Before discussing the present embodiments in detail, a few terms are defined. In this specification, "a source image" or "an initial image" refers to an image that acts as a basis for the purposes of the present embodiment, i.e., the lowest level of the image/file sequence. One or more other images and files forming a data sequence are placed on the source image. These images and files are referred to as "notes". "A note" has automatically generated metadata and optionally also user defined other data.

"Sub-image" or "sub-file" is an item that is placed on an image acting as a note for the initial image. Also sub-image (sub-file) has automatically generated metadata and optionally also user defined other data. Image acting as a note for the initial image may contain one or more sub-images (and/or sub-files). Thus, the present embodiments enable creating a data sequence comprising at least a source image and one or more inclusive images, i.e., at least one note image and a sub-image. The sub-image is the last image in the data sequence. It is appreciated that there can be other files in addition to the images to be placed to source image and to the one or more note images.

The data sequence provided by the present embodiments enables creating an image model that is used for storing data and enabling retrieval of such data. The image model can be two-dimensional (2D) or three-dimensional (3D), but may also enable fourth dimension for time. Image-based data management according to present embodiments enables making notes in the image. "Notes" in this respect refers to aforementioned data (i.e., other images and/or files) that is to be stored by an image and can be navigated to from the content of the image.

This is made possible by utilizing metadata. Metadata is known as data providing information about other data. For example document files, image files, spreadsheet files, presentation files, video files, audio files (and any other) may have metadata telling the creation date, author, modification date, access rights, hashtags of the file and so on. The metadata comprises fields into which descriptive data can be input.

According to the present embodiments an image or other file that acts as a note for an initial image has metadata that indicates a location in the initial image where an indication of a corresponding note is to be visually shown, and an identification of the initial image. Therefore, a note image or a note file will have metadata having fields storing information on the initial image to which the note is placed. In addition, any sub-images (or sub-files) have metadata containing information on the note image (i.e., a preceding image) to which an indication of the sub-image is placed. By this a sequence of data is created, so that the a first image (i.e., a source image, an initial image, a canvas) will contain a chain of nested (i.e., inclusive) images and/or other files.

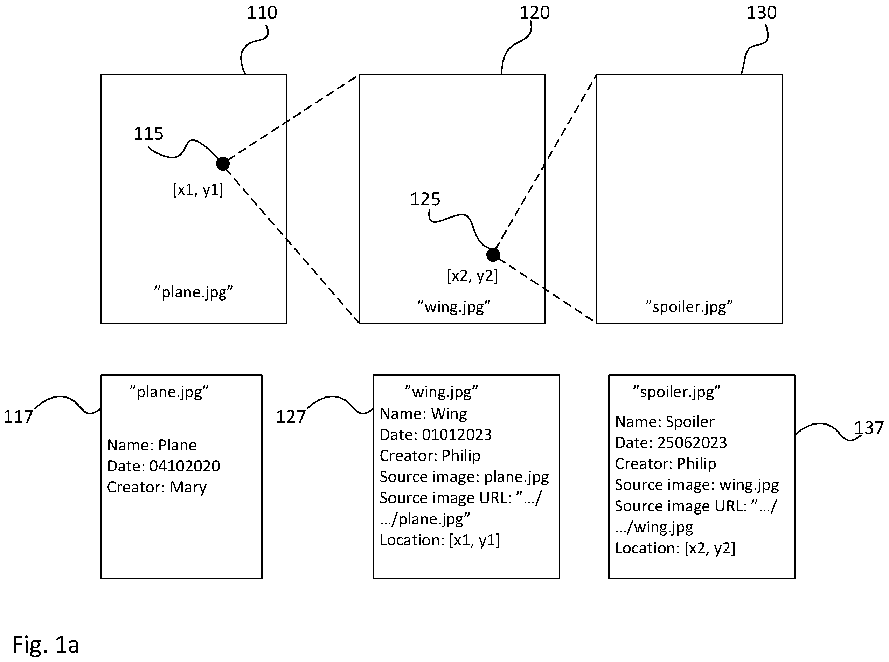

Figure 1a illustrates in simplified manner the idea of the present embodiment. In Figure 1a, an image 110 having a file name "plane.jpg" represents an initial image. The image 110 has metadata 117 describing the image. In this example, the metadata 117 comprises name of the image file, creation date, name of a creator.

In Figure 1a, an image 120 represents a note image "wing.jpg", whose existence is to be shown on the initial image 110 in a location [x1, y1]. This is implemented by metadata 127 of image 120, wherein the metadata 127 comprises identification for the source image 110, i.e., a name and an address (e.g., a URL), as well as data on the location on the source image 110, i.e., [x1, y1].

In Figure 1a, a sub-image 130 is also shown, that may be navigated from the content of the note image 120, i.e., the image that is preceding the sub-image 130. This is similarly implemented by a metadata 137 comprising identification of the preceding image 120, i.e., a name and an address (e.g., a URL), as well as data on the location on the preceding image 120, i.e., [x2, y2].

With such an arrangement, an image will contain a location indicating to a user a way to navigate to (or search) further image data or other data. This means that a user may look at the image 110 representing a plane, and browse into details of a wing directly from the content of the image 110 and in particular from such location of the content of the image 110, where the wing is shown. The details of the wing is in the form of a subsequent image 120, that is opened through the indication 115 in the visual content of the initial image 110. Similarly, the user may look at the image 120 representing a wing, and browse into details of a spoiler of the wing directly from the content of the image 120 and in particular from such location of the content of the image 120, where the spoiler is shown. The details of the spoiler is in the form of a subsequent image 130, that is opened through the indication 125 in the visual content of the image 120.

Therefore, an image 110, 120 has a link to another image 120, 130 within the content of the image 110, 130. The link is implemented by generating metadata 127, 137 that comprises data on location of the link.

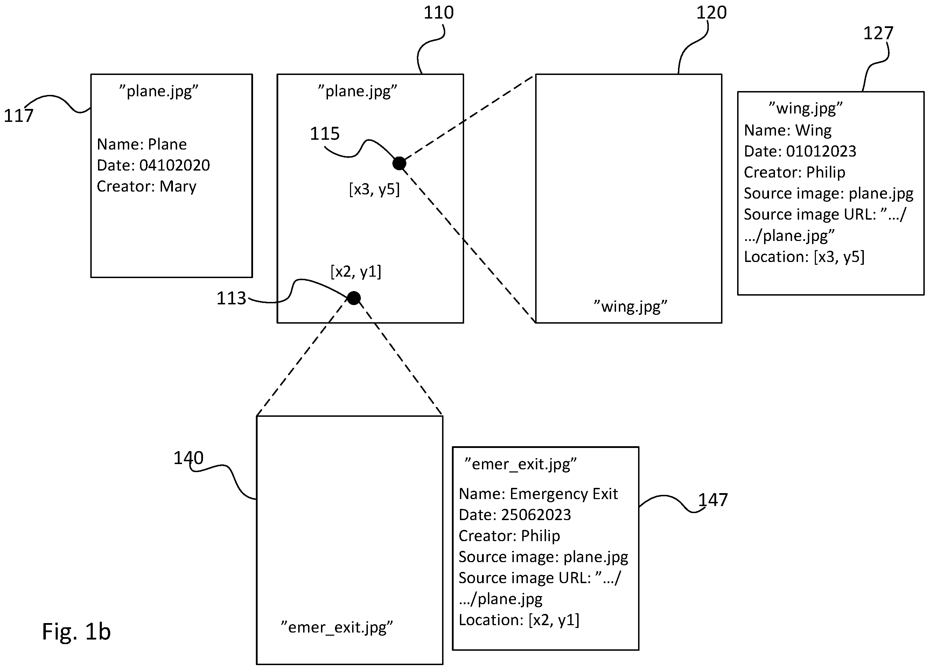

In Figure 1a, an example of a situation where an image comprises a reference to another image in its metadata has been shown. However, it is appreciated that an image can indicate one or more images, each of which having been "placed" to the visual content of the image. This has been illustrated in Figure 1b. In this example the image 110 that acts as a source for further images 120, 140 may have several visual indications 113, 115, each of which provides details relating to specific items in the image 110. As shown in Figure 1b, each of the further images 120, 140 have metadata 127, 147 identifying the initial image (plane.jpg) and where the initial image is to be found ("source image URL"). Both images 120, 140 have their own indications 113, 115 in the content of the initial image 110, which are also indicated in the metadata 127, 147.

So, when starting from an initial image, a subsequent image may have metadata storing a location of the preceding image and storing information where a indication should be placed in the preceding image's content. Similarly any further subsequent image may have metadata storing a location of a preceding image, and storing information where a link should be placed in the preceding image's content This chain can be arbitrary long, thus nesting images and other data.

The metadata of the initial image, subsequent images and/or other inclusive files also comprises time information. Such time information may comprise time of capture/generation or time of adding the file to the application. The time information enables creation of a timeline, where all the chained (or linked) images and files can be placed to a common timeline based on when the images/files have been created or brought to the application. The timeline will allow a user to navigate the inserted images/files in temporal dimension, which may be useful when searching data for a specific temporal situation.

In addition, it is to be appreciated that the image is an example of possible file types to be included in the image. Thus, a source image may act as an origin for one or more links targeted to one or more inclusive files, wherein an image can be an example of a file type.

In order to utilize the solution as presented above, the user may create a project by an application. The application may be an application stored in a mobile device or in other type of computer, or the application may be used through a web site from a server. The project creation generates a file structure to the server (or into a cloud) into which the images and other data is stored. An initial image is obtained for the project. The initial image can be captured by a camera of a user device, which user device is also utilized for using the application. Alternatively, the initial image can be downloaded from another server or from the image gallery of the user device. This initial image acts as a source image, into which notes are inserted.

After the project has been created and the initial image has been stored, notes can be inserted to the initial image. For that, the user obtains a file to be included to the initial image, and selects a location in the initial image to which the inclusive file (i.e., its indication) is to be placed. The location can be defined by a two-dimensional grid, i.e., a set of two-dimensional coordinates. The selection enables the user to download/generate/capture data (e.g., a document, an image, a spreadsheet, etc.) that will be searched and reached from the content of the initial image. When the user confirms which data is to be inserted, a visual indication is generated to the initial image, in the selected location. The data on the selected location is stored to the metadata of the file to be included. The user interface of the application enables the user to move the indications in the content of the initial image, still maintaining the correspondence to the included note by modifying the metadata with that respect. If the user deletes the indication, also the corresponding included note may be deleted.

The created project may have several layers, wherein each layer may have its own initial image into which notes are inserted.

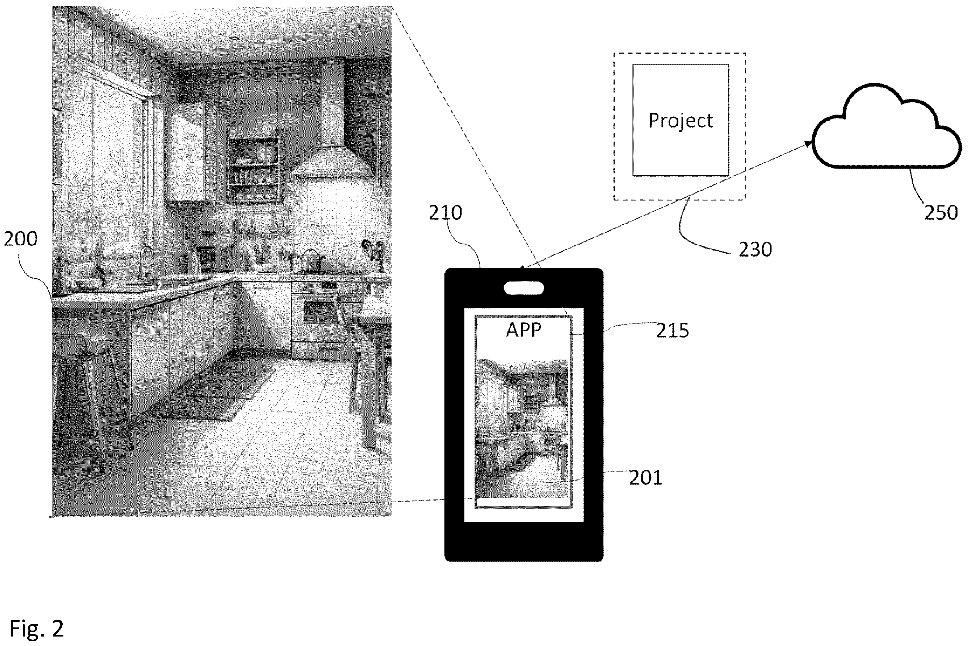

The solution as presented above can be utilized in many contexts, one of which is illustrated by means of Figures 2 to 5.

Figure 2 illustrates an example of one of the situations that may utilize the present embodiments. In this example, a user device 210 having a camera takes an image 201 of a target area 200, such as a kitchen. The image 201 is shown in the application 215. A project 230 is created and stored in a cloud server 250 (or a physical server), with the image 201 acting as an initial image.

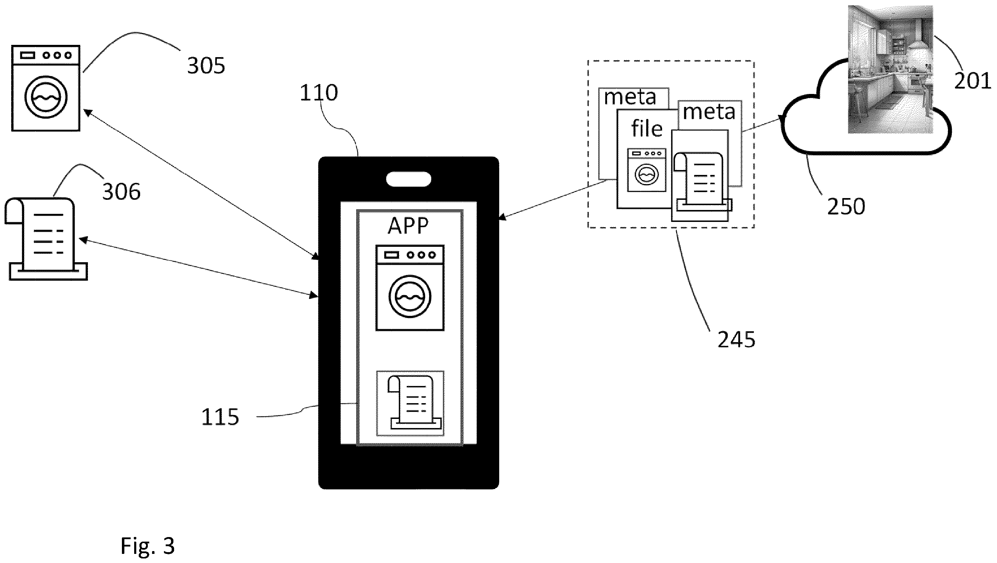

Figure 3 illustrates an example, where a user takes an image of a washing machine 305, which image is stored to the project in the server 250, and is made obtainable from the initial image 201. After capturing the image of the washing machine 305, the user may define a location on the initial image 201, where the existence of the capture image 305 is to be indicated. The indication can also have a name on the initial image's such as "washing machine". The user may also take an image of a guarantee 306 of the washing machine, and define a metadata for the guarantee to refer to the image of the washing machine 305. By this, when the user opens an image of the washing machine 305 from the content of the initial image 201, s/he will see an indication of the guarantee 306. By selecting such indication, the user may open the image of the guarantee 306. The image of the washing machine and the image of the guarantee may be transferred to the cloud 250 with their metadata.

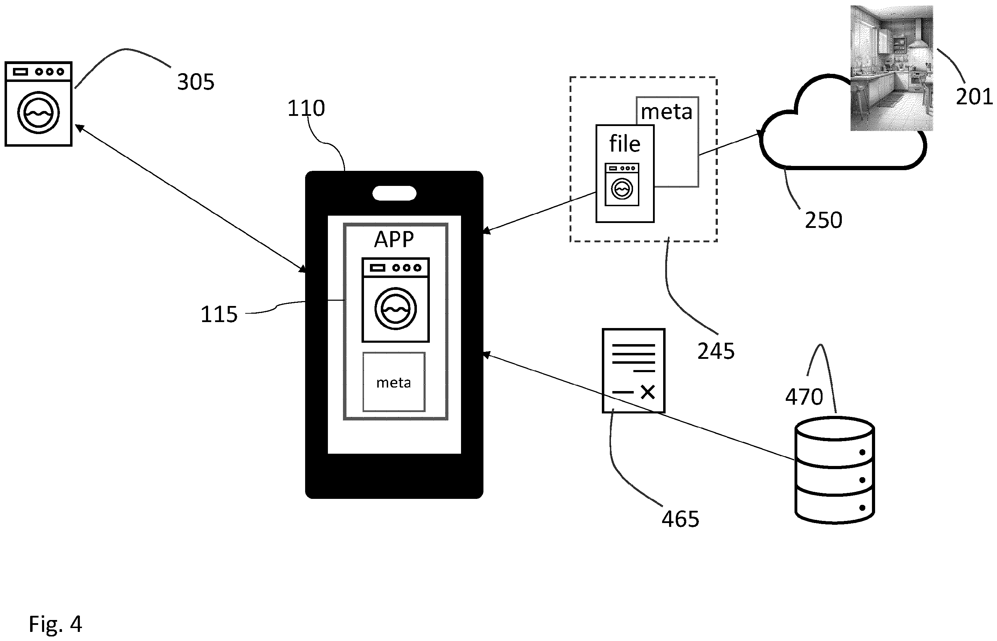

Figure 4 illustrates an example, where a user takes an image of a washing machine 305, which image is stored to the project in the server 250, wherein the metadata identifies the initial image 201 to which the indication of the image of the washing machine 305 is to be placed. Also, the user may download a manual 465 from a third-party server 470, e.g., a manufacturer, and to generate metadata for the manual 465, wherein such metadata identifies the image of the washing machine 305 and a location in the content of the image of the washing machine 305 where indication of the manual 465 is to be stored. Instead of downloading the manual to user device, the metadata of the image of the washing machine may contain a direct link in the form of a URL (Uniform Resource Locator) to a server storing the manual. As shown in Figure 4, the image of the washing machine and the metadata are transferred to the server 250.

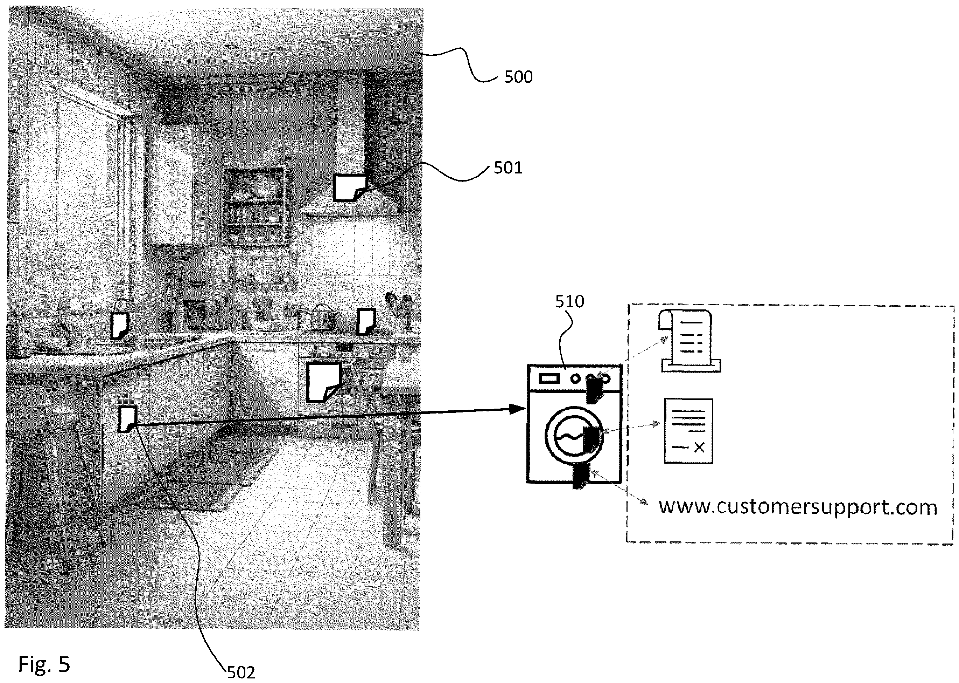

Figure 5 illustrates an example of how the data can be browsed within an image. An image 500 is provided on a user interface of an application, wherein the image comprises one or more visual indications 501, 502. These visual indications indicate where in the image 500 further data can be found. Therefore, the visual indications 501, 502 are links to further data. The user may select one of the indications (indication 502 in Figure 5), whereupon an image 510 of a washing machine can be opened, through which further data 520 can also be obtained. For example, as shown in Figure 5, the image 510 of the washing machine may contain indications to navigate to an image of a guarantee and to a manual of the washing machine, and to obtain data on how a customer care can be connected.

Similarly, by selecting an indication 501 on an extractor hood, images and other documents can be retrieved from the initial image of the kitchen, and further from the image of the extractor hood.

Figures 2-5 represent an example on how a user can store data that is somehow related to a certain place. i.e., kitchen, of the house.

It is appreciated that other applications are possible for the general idea of the present embodiments.

For example, constructors may utilize the present embodiments for reporting different phases of the construction site, starting from excavation and ending to a finished building. In such example, the construction project may have several layers having their own initial images, and the use of different materials, different elements, different devices etc., can be stored to each initial image for a respective phase. Since each image will have a timestamp stored in the metadata, a time dimension can be taken along when browsing the data. For example, instead of or in addition to displaying a different image for different phases, also a timeline showing the phases can be presented. By navigating through the timeline, the images and other data relating to different phases can be retrieved. In order to create the timeline, the application may go through the metadata of all images of the project and retrieve the time information. This time information may be displayed on a timeline or other suitable visualization. By selecting a certain spot from the timeline, the corresponding image may be shown to the user with indications to further data in the form of image files or other type of files.

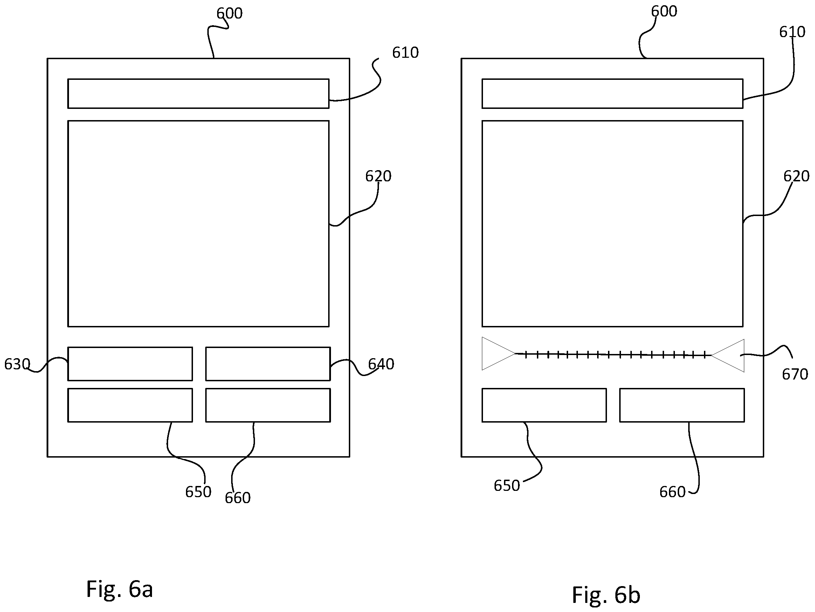

Figures 6a, 6b illustrate examples of a user interface view enabling a user to utilize the timeline for searching data. In both Figure 6a and Figure 6b, a display 600 of an apparatus is illustrated, wherein the display 600 shows a user interface view of an application according to present embodiments. The user interface view comprises user interaction elements, such as a menu 610 enabling a user to select a functionality carried out in the application. The user interface view also comprises a view to an image 620, which can be an initial image or an inclusive image, or which can be composed of picture-in-picture showing both the initial image and the inclusive image. The user interface view may comprises time selection means, which in Figure 6a is formed of date fields 630, 640 into which a user can select or enter the start date for the timeline and the end date for the timeline. If a selection functionality is used in the application, the application will have a datepicker tool that opens a calendar view from which desired dates are selected. In Figure 6b, the dates can be selected by a slider 670, wherein a user is enabled to outline the timeline by means of limiters (i.e., arrows). Fields 650 and 660 will show the selected dates accordingly. In both cases, the application has a functionality that goes through the metadata of images that are related to the project in question or the initial image in question to find time data that falls between the selected start date and the end date.

As another example, a janitorial service may store data concerning maintenance work done for buildings. For example, the operator of the janitorial service may have an image of a building as an initial image, and the images reachable from the initial image can comprises picture of a wall, which further includes information on a used color for the painting. As another example, report concerning yearly elevator control may be indicated in an image of the elevator, which image of the elevator is also indicated on the initial image representing the building.

In above, some examples of suitable applications for the present embodiments have been given. It is appreciated that the solution can be utilized in gardening, in interior design, in shopping, in any inventory, renovation planning, etc. In addition, the solution can be utilized in error monitoring, in visualizing design work, in maintenance work, in worksite safety reporting, etc.

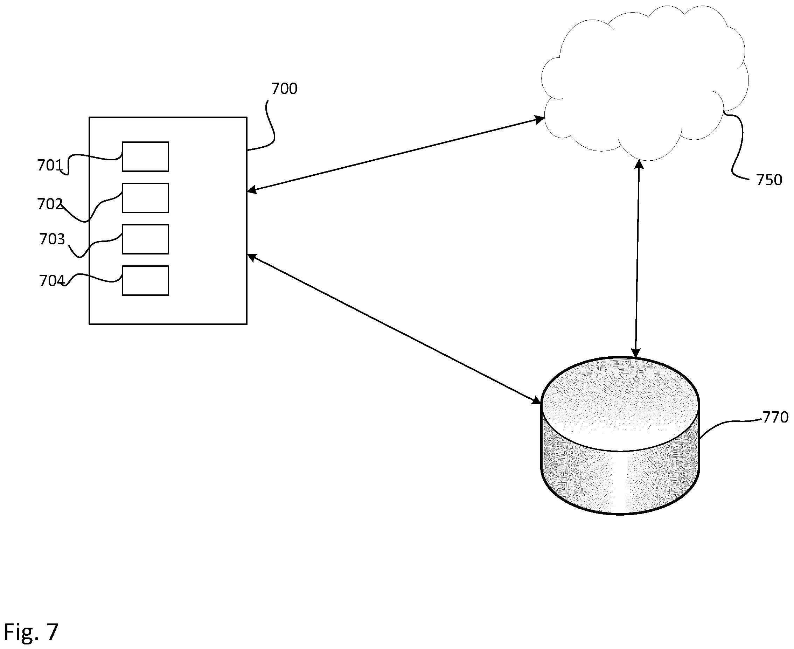

Figure 7 illustrates an example of system with dedicated apparatuses within which a solution according to present embodiments can be implemented. The system comprises an apparatus 700 having a plurality of functional elements. The plurality of functional elements comprises at least one or more processors 701, a memory 702, a communication interface 703 and a camera 704. The processor 701 is configured to read data that is stored in the memory 702 and perform functions according to such data. The memory may comprise computer program code for a plurality of on-premises applications, where one of the application may be an application according to present embodiments for image-based data management. One of the on-premises application may be a browser, through which an application according to present embodiments for image-based data management may be alternatively reached. In such case, the application is stored on a server 770 or on a cloud 750 which can be connected through a communication interface 703. The communication interface 703 may thus comprises data transfer means to one or more other devices 750, 770 over a data transfer network. In addition, the communication interface 703 may create a communication path between the apparatus 700 and a user through a user interface. The camera 704 captures images that are stored to the memory 702 of the device for the purposes of the present embodiments. The projects that are created according to the present embodiments may be stored in a cloud 750. Instead of or in addition to the cloud 750, physical servers/databases can be used. The processor 701 is able to complement metadata for the images as discussed above.

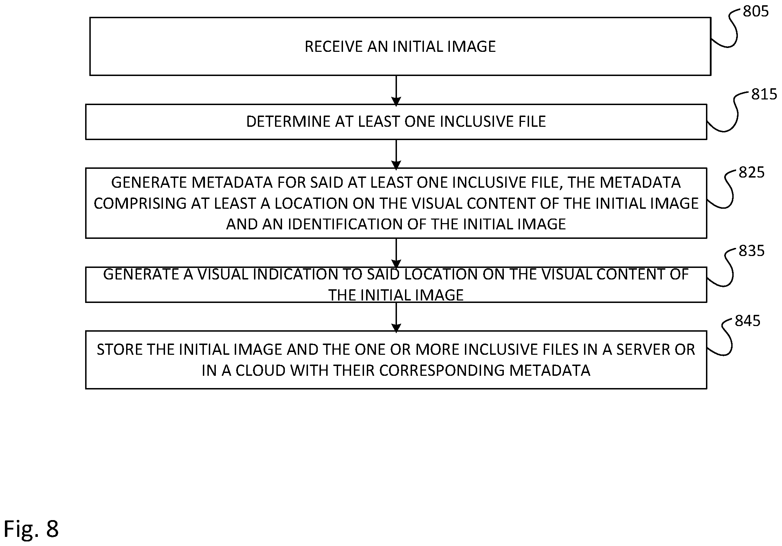

Figure 8 is a flowchart illustrating a method according to an embodiment. The method comprises steps for receiving 805 an initial image; determining 815 at least one inclusive file; generating 825 metadata for said at least one inclusive file, the metadata comprising at least a location within the initial image and an identification of the initial image; generating 835 a visual indication to said location within the initial image; and storing 845 the initial image and the one or more inclusive files in a server or in a cloud with their corresponding metadata. Each of the steps can be implemented by a respective module of a computer system.

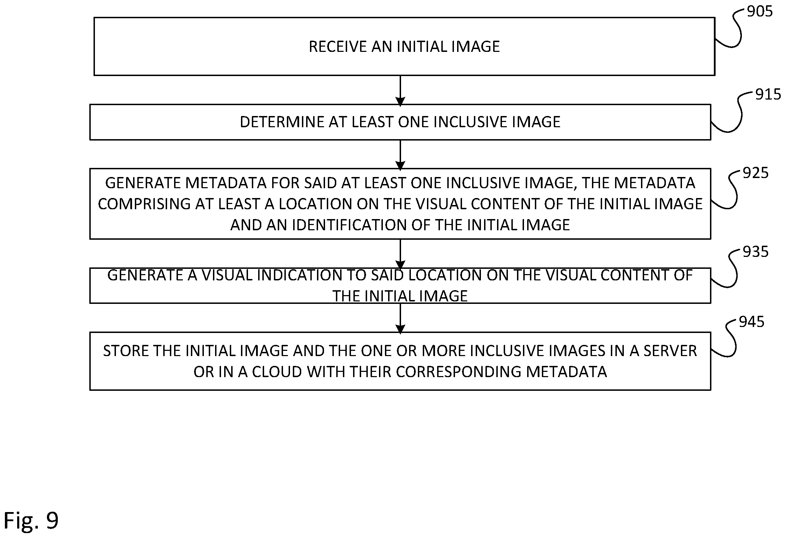

According to an example, the inclusive file is an image, wherein the method may comprises steps according to flowchart of Figure 9. The embodiment of Figure 9 comprises steps for receiving 905 an initial image; determining 915 at least one inclusive image; generating 925 metadata for said at least one inclusive image, the metadata comprising at least a location within the initial image and an identification of the initial image; generating 935 a visual indication to said location within the initial image; and storing 945 the initial image and the one or more inclusive images in a server or in a cloud with their corresponding metadata. Each of the steps can be implemented by a respective module of a computer system.

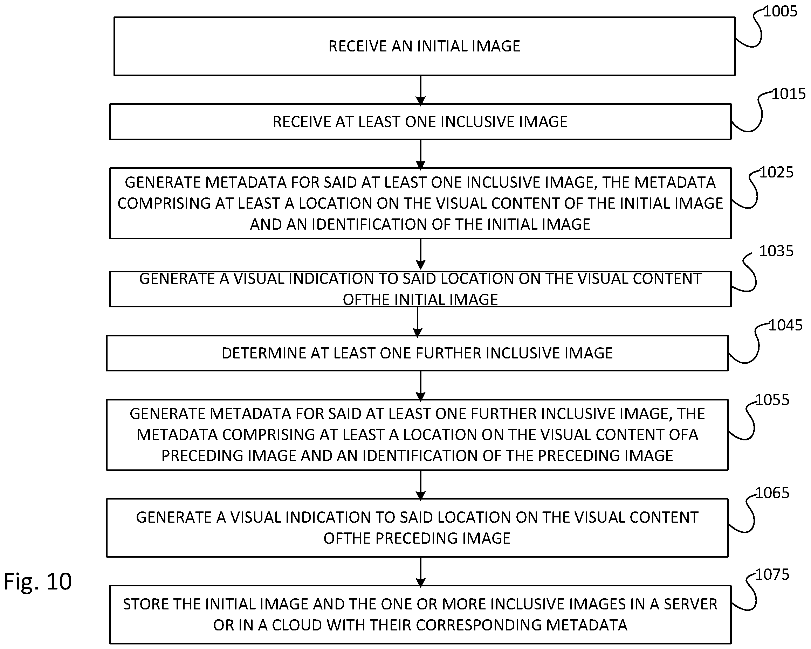

Figure 10 shows a method according to yet another embodiment. The method comprises steps for receiving 1005 an initial image; receiving 1015 at least one inclusive image; generating 1025 metadata for said at least one inclusive image, the metadata comprising at least a location within the initial image and an identification of the initial image; generating 1035 a visual indication to said location within the initial image; determining 1045 at least one further inclusive image; generating 1055 metadata for said at least one further inclusive image, the metadata comprising at least a location within a preceding image and an identification of the preceding image; generating 1065 a visual indication to said location within the preceding image; and storing 1075 the initial image and the one or more inclusive images in a server or in a cloud with their corresponding metadata. Each of the steps can be implemented by a respective module of a computer system.

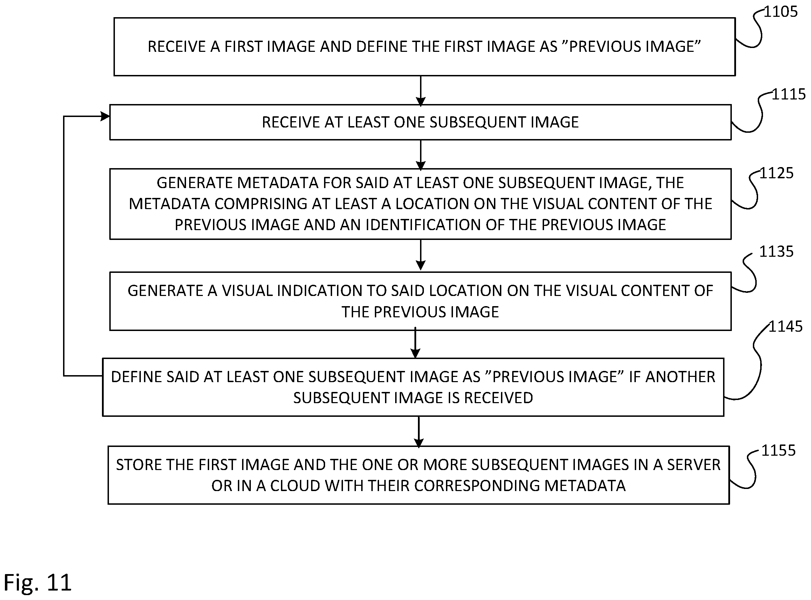

The embodiments shown in Figures 8 - 10 may be summarized into a flowchart of Figure 11. The flowchart illustrating a method according to an embodiment, wherein the method comprises steps for receiving 1105 a first image and defining the first image as "previous image"; receiving 1115 at least one subsequent image; generating 1125 metadata for said at least one subsequent image, the metadata comprising at least a location within the previous image and an identification of the previous image; generating 1135 a visual indication to said location within the previous image; if a new image is received to be included in the sequence of images, the subsequent image is defined 1145 as "previous image" and a new image is captured as a subsequent image 1115. The process is looped as long as there are images to be included in the chain of images. Finally, the first image and all the subsequent images are stored 1155 in a server or in a cloud with their corresponding metadata. Each of the steps can be implemented by a respective module of a computer system.

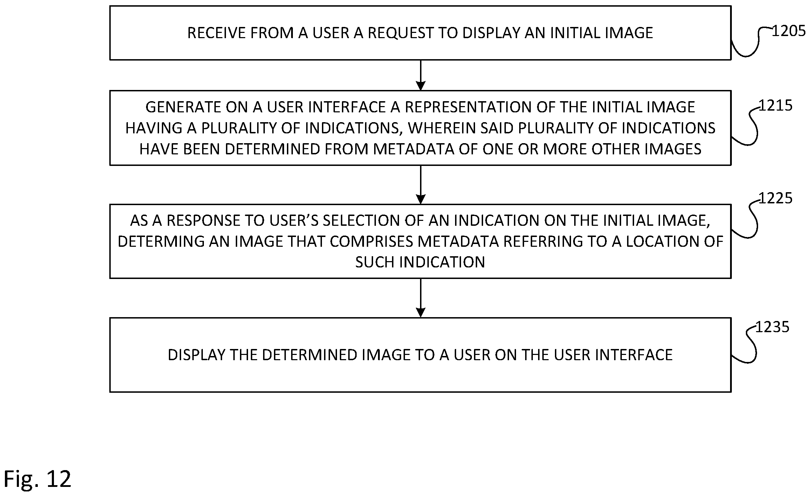

Figure 12 is a flowchart illustrating a method for searching for data according to present embodiments. The method comprises steps for receiving 1205 a request from a user to display an initial image; generating 1215 on a user interface a representation of the initial image having a plurality of indications, wherein said plurality of indications have been determined from metadata of one or more other images; as a response to user's selection of an indication on the initial image, searching 1225 for an image that comprises metadata referring to a location of such indication; and displaying 1235 such image to a user on the user interface. Each of the steps can be implemented by a respective module of a computer system.

An apparatus according to an embodiment comprises means for implementing any of the methods, shown in Figures 8 - 12. The means for the apparatuses comprises at least one or more processors, and memory storing computer program, wherein the computer program have computer code to cause an apparatus or a system to implement the method according to Figures 8-12.

The various embodiments can be implemented with the help of computer program code that resides in a memory and causes the relevant apparatuses to carry out the method. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of various embodiments.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method, comprising:
- receiving an initial image;
- determining at least one inclusive file;
- generating metadata for said at least one inclusive file, the metadata comprising at least a location on the visual content of the initial image and an identification of the initial image;
- generating a visual indication to said location on the visual content of the initial image; and
- storing the initial image and the one or more inclusive files in a server or in a cloud with their corresponding metadata.

2. The method according to claim 1, wherein the metadata comprises time information relating to an inclusive file.

3. The method according to claim 1 or 2, further comprising generating an image model on the initial image and displaying the image model to a user, wherein the image model comprises generated visual indications.

4. The method according to claim 1 or 2 or 3, wherein as a response to user's selection of a visual indication, the method comprises retrieving a corresponding inclusive file.

5. The method according to any of the claims 2 to 4, further comprising generating a timeline of inclusive files based on the time information being stored in their metadata.

6. The method according to any of the claims 1 to 5, wherein the inclusive file is an image.

7. The method according to claim 6, further comprising determining at least one further image; generating metadata for said at least one further image, the metadata comprising at least a location on the visual content of the inclusive file and an identification of the inclusive file; generating a visual indication to said location on the visual content of the inclusive file; and storing the at least one further image in a server or in a cloud with their corresponding metadata.

8. An apparatus, comprising:
- means for receiving an initial image;
- means for determining at least one inclusive file;
- means for generating metadata for said at least one inclusive file, the metadata comprising at least a location on the visual content of the initial image and an identification of the initial image;
- means for generating a visual indication to said location on the visual content of the initial image; and
- means for storing the initial image and the one or more inclusive files in a server or in a cloud with their corresponding metadata.

9. The apparatus according to claim 8, wherein the metadata comprises time information relating to an inclusive file.

10. The apparatus according to claim 8 or 9, further comprising means for generating an image model on the initial image and displaying the image model to a user, wherein the image model comprises generated visual indications.

11. The apparatus according to claim 8 or 9 or 10, wherein as a response to user's selection of a visual indication, the apparatus comprises means for retrieving a corresponding inclusive file.

12. The apparatus according to any of the claims 9 to 11, further comprising means for generating a timeline of inclusive files based on the time information being stored in their metadata.

13. The apparatus according to any of the claims 8 to 12, wherein the inclusive file is an image.

14. The apparatus according to claim 13, further comprising means for determining at least one further image; generating metadata for said at least one further image, the metadata comprising at least a location on the visual content of the inclusive file and an identification of the inclusive file; generating a visual indication to said location on the visual content of the inclusive file; and storing the at least one further image in a server or in a cloud with their corresponding metadata.
